# EUROPÄISCHE PATENTSCHRIFT

(11) **EP 1 306 950 B1**
(45) Veröffentlichungstag und Bekanntmachung des Hinweises auf die Patenterteilung: **20.06.2012**
(21) Anmeldenummer: 02023379.7
(22) Anmeldetag: 18.10.2002
(51) Int. Cl.: H02B 1/30

(54) **Rack oder Schaltschrank mit geöffneter Rückseite**
Rack or switchgear cabinet with openable rear side
Boîtier ou armoire de distribution avec face arrière ouvrable

(30) Priorität: 24.10.2001 DE 10152341
(43) Veröffentlichungstag der Anmeldung: 02.05.2003
(73) Patentinhaber: Fujitsu Technology Solutions Intellectual Property GmbH, 80807 München (DE)
(72) Erfinder: Knoop, Franz-Josef, 33142 Büren-Steinhausen (DE)
(74) Vertreter: Epping - Hermann - Fischer

(56) Entgegenhaltungen:
- DE-C- 19 811 712
- US-A- 5 511 798

## Beschreibung

Die Erfindung betrifft ein Rack oder einen Schaltschrank mit einer Rückseite, die geöffnet werden kann, wobei zwischen der Rückseite und dem Rack ein Kabeldurchbruch ausgebildet ist.

Die Racks oder Schaltschränke werden überwiegend in Rechenzentren aufgestellt. Die externe Verkabelung findet im hinteren Teil des Schrankes statt. Oft werden die Schränke aneinandergereiht und auch miteinander verschraubt. Eine verschraubte Reihe bildet dann eine Einheit.

Die Zuführung der Kabel kann von allen Seiten erfolgen, z.B. von unten aus dem Doppelboden, von oben aus der Decke und von den Seiten über die Schrankaneinanderreihung.

Wenn im Servicefall oder zum Aufrüstung ein Schrank aus der Anbaureihe herausgezogen werden muß, darf die Verkabelung zu den benachbarten Schränken in der Reihe nicht unterbrochen werden. Desweiteren müssen die Kabel durch Abziehen der Stecker im Schrank, an den Austrittspositionen der Decke oder Doppelboden erhalten bleiben.

Bisher werden die Kabel durch Kabeldurchbrüche an den Schränken gefädelt, wie es beispielsweise bei einem Schrank gemäß der Druckschrift DE 198 11 712 C1 der Fall ist. Somit ist ein Schrank in einem Kabelstrang gefesselt und es müssen zum Auswechseln eines Schrankes in einem Kabelstrang alle Kabel abgezogen und ausgefädelt werden, welche durch die Kabeldurchbrüche dieses Schrankes durchgefädelt sind.

Die Druckschrift US 5,511,798 A zeigt ein Gehäuse, bei dem Kabelführungen in ein EMI-Gasket am Gehäuse integriert sind. Bei demontierter Abdeckplatte am Gehäuse sind die Kabelführungen als Öffnungen frei zugänglich. Bei montierter Abdeckplatte ist das Gasket EMI dicht abgeschlossen, sodass auch die Kabelführungen EMI dicht sind. Die Lösung der US 5,511,798 A hat bezogen auf eine Handhabung der Verkabelung jedoch den Nachteil, dass die Öffnungen zum Durchführen der Kabel aufgrund der EMI-Abdichtung klein sind und an festgelegten Stellen liegen. Kabel müssen somit händisch verlegt bzw. entnommen werden und können auch nur an vorbestimmten Stellen ins Gehäuse geführt werden.

Der Erfindung liegt daher die Aufgabe zugrunde, ein Rack aufzuzeigen, welches eine flexibel handhabbare Verkabelung des Racks in einem Rechenzentrum ermöglicht sowie auch ein späteres Auswechseln oder Aufrüsten des Rackes erleichtert.

Diese Aufgabe wird erfindungsgemäß dadurch gelöst, dass der Kabeldurchbruch als umlaufender Spalt zwischen Rückseite und Rack ausgebildet ist und die Rückseite abnehmbar ist und durch das Abnehmen der Rückseite der Kabeldurchbruch geöffnet wird.

Eine derartige erfindungsgemäße Ausbildung eines Kabeldurchbruches hat den großen Vorteil, dass die Anschlußkabel nicht mehr durch die Kabeldurchbrüche gefädelt werden müssen. Zum Aufrüsten oder Auswechseln des Rackes muß lediglich die Rückseite abgenommen, die Stecker aus dem Rack gezogen werden. Das Rack kann dann ausgetauscht oder nach vorne aus der Einheit mit den benachbarten Racks herausgezogen werden, um dies Aufrüsten zu können.

Ferner hat dies den Vorteil, dass sowohl Kabelführungen nach oben zur Decke wie nach unten zum Doppelboden wie auch seitlich zu den benachbarten Schränken möglich sind.

Die Rückseite ist vorteilhafterweise lediglich durch Abstandshalter am Rack angebracht.

Diejenigen Stellen des umlaufenden Spaltes, die nicht zur Kabeldurchführung benötigt werden, können mit Blenden verschlossen werden.

Eine weitere Ausgestaltung der Erfindung sieht vor, dass die Rückseite als Tür ausgebildet ist, die ausgehängt werden kann. Durch die Ausbildung als Tür ist stets ein Zugang zur Rückseite des Racks möglich und lediglich zum Auswechseln des Racks oder zum Aufrüsten des Racks muß diese ausgehängt werden.

Ein weiterer Vorteil der Erfindung ergibt sich dadurch, dass durch die Beabstandung der Rückseite vom Rack die Tiefe des geamten Racks auf bereits bestehende Racks im Rechenzentrum einstellbar ist.

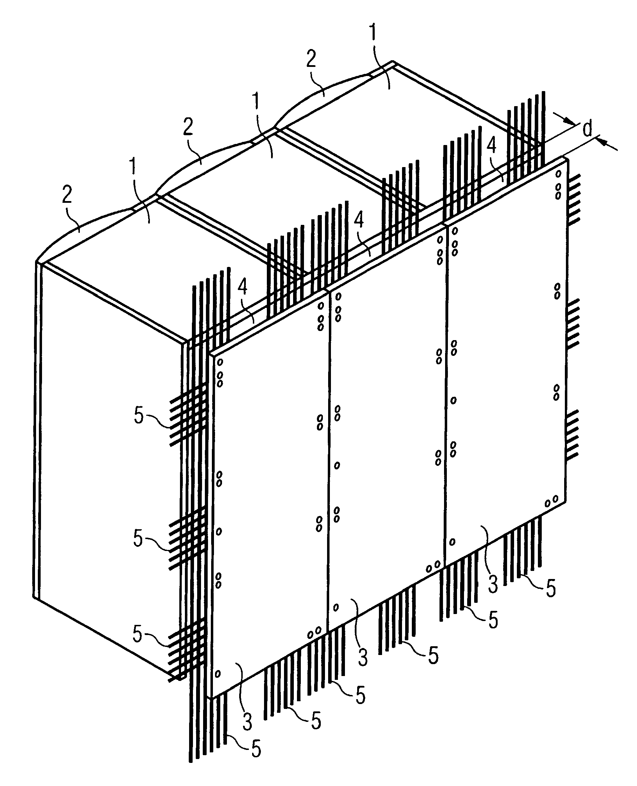

Nachfolgend wird die Erfindung anhand eines in den Zeichnungen dargestellten Ausführungsbeispieles näher erläutert. In der Zeichnung zeigt
- die einzige Figur 1: eine Schrägansicht 3 zu einer Ein- heit verschraubten Racks.

Figur 1 zeigt in einer Ansicht von schräg hinten oben drei Racks oder Schaltschränke 1, wie sie in einem Rechenzentrum aufgestellt werden. Die drei Racks 1 sind seitlich miteinander verschraubt und jeweils mit einer Fronttüre 2 versehen.

Die hintere Seite der Racks 1 ist jeweils mit einer abnehmbaren Rückseite 3 verschlossen, die als Türe ausgebildet ist.

Zwischen der abnehmbaren Rückseite 3 und dem Rack 1 ist ein Kabeldurchbruch 4 in Form eines umlaufenden Spaltes mit der Breite d ausgebildet.

Durch den Kabeldurchbruch 4 können somit sowohl nach oben wie nach unten als auch seitlich Kabel 5 hindurchgeführt werden.

Um zum Beispiel das mittlere Rack 1 auswechseln zu können, muß lediglich die Rückseite geöffnet und ausgehängt und anschließend die Stecker der Kabel 5 vom Rack 1 abgezogen werden.

Löst man nun noch eine eventuelle Verschraubung mit den benachbarten Racks, so kann man das mittlere Rack 1 nach vorne herausziehen und auswechseln oder aufrüsten.

Werden bestimmte Bereiche des Kabeldurchbruches 4 nicht benötigt, können diese durch Blenden verschlossen werden.

Die Erfindung ist nicht auf das dargestellte Ausführungsbeispiel beschränkt, so ist es ebenso möglich, mehrere Kabeldurchbrüche an der Deckenwandung, den Seitenwandungen und der Bodenwandung des Racks vorzusehen, welche durch die abnehmbare Rückseite 3 nach hinten geöffnet werden. Ebenso ist es auch möglich die Kabeldurchbrüche an der abnehmbaren Rückseite 3 vorzusehen, welche sich u-förmig in Richtung Rack öffnen, so dass ebenfalls durch das Abnehmen der Rückseite 3 die Leitungen oder Kabel 5 frei zugänglich sind und lediglich nur vom Rack 1 abgezogen werden müssen, um das Rack 1 aus den Kabelverbund entfernen zu können.

## Patentansprüche

1. Rack (1) oder Schaltschrank mit einer Rückseite (3), die geöffnet werden kann, wobei zwischen der Rückseite (3) und dem Rack (1) ein Kabeldurchbruch (4) ausgebildet ist, **dadurch gekennzeichnet, dass**
der Kabeldurchbruch (4) als umlaufender Spalt zwischen Rückseite (3) und Rack (1) ausgebildet ist und die Rückseite (3) abnehmbar ist und durch das Abnehmen der Rückseite (3) der Kabeldurchbruch (4) geöffnet wird.

2. Rack nach Anspruch 1,
**dadurch gekennzeichnet, dass**
diejenigen Stellen des umlaufenden Spaltes, die nicht zur Kabeldurchführung benötigt werden, mit einer Blende verschlossen sind.

3. Rack nach Anspruch 1 oder 2,
**dadurch gekennzeichnet, dass**
die Rückseite (3) als Tür ausgebildet ist, die ausgehängt werden kann.

4. Rack nach einem der Ansprüche 1 bis 3,
**dadurch gekennzeichnet, dass**
durch die Beabstandung der Rückseite (3) vom Rack (1) die Tiefe des gesamten Racks einschließlich der Rückseite einstellbar ist.

5. Anordnung mit mehreren Racks nach einem der Ansprüche 1 bis 4, wobei die Racks (1) seitlich zu einer Einheit verschraubt sind.

## Claims

1. Rack (1) or switchgear cabinet having a rear face (3) which can be opened, with a cable aperture (4) being formed between the rear face (3) and the rack (1),
**characterized in that**
the cable aperture (4) is in the form of a peripheral gap between the rear face (3) and the rack (1), and the rear face (3) can be removed, and the cable aperture (4) is opened by removing the rear face (3).

2. Rack according to Claim 1,
**characterized in that**
those points of the peripheral gap which are not required for cable routing are closed by a panel.

3. Rack according to Claim 1 or 2,
**characterized in that**
the rear face (3) is in the form of a door which can be unhinged.

4. Rack according to one of Claims 1 to 3,
**characterized in that**
the depth of the entire rack, including the rear face, can be adjusted by the spacing of the rear face (3) from the rack (1).

5. Arrangement having a plurality of racks according to one of Claims 1 to 4, with the racks (1) being laterally screwed together to form a unit.

## Revendications

1. Rack (1) ou armoire de distribution comprenant une face arrière (3) qui peut être ouverte, un passage de câbles (4) étant réalisé entre la face arrière (3) et le rack (1),
**caractérisé en ce que**
le passage de câbles (4) est réalisé en tant qu'interstice périphérique entre la face arrière (3) et le rack (1), et la face arrière (3) peut être enlevée et le passage de câbles (4) est ouvert par l'enlèvement de la face arrière (3).

2. Rack selon la revendication 1,
**caractérisé en ce que**
les endroits de l'interstice périphérique qui ne sont pas requis pour le passage des câbles sont fermés à l'aide d'un recouvrement.

3. Rack selon la revendication 1 ou 2,
**caractérisé en ce que**
la face arrière (3) est réalisée sous forme de porte qui peut être décrochée.

4. Rack selon l'une quelconque des revendications 1 à 3,
**caractérisé en ce que**
la profondeur de l'ensemble du rack, face arrière incluse, peut être ajustée grâce à l'espacement entre la face arrière (3) et le rack (1).

5. Agencement comprenant plusieurs racks selon l'une quelconque des revendications 1 à 4, dans lequel les racks (1) sont vissés latéralement pour former une unité.
